# EUROPÄISCHE PATENTSCHRIFT

(11) **EP 0 995 108 B1**
(45) Veröffentlichungstag und Bekanntmachung des Hinweises auf die Patenterteilung: **02.04.2003**
(21) Anmeldenummer: 98942534.3
(22) Anmeldetag: 10.07.1998
(51) Int. Cl.: G01N 21/88

(54) **VERFAHREN ZUR AUTOMATISCHEN ERKENNUNG VON OBERFLÄCHENFEHLERN AN ROHKAROSSERIEN UND VORRICHTUNG ZUR DURCHFÜHRUNG DES VERFAHRENS**
METHOD FOR THE AUTOMATIC RECOGNITION OF SURFACE DEFECTS IN BODY SHELLS AND DEVICE FOR CARRYING OUT SAID METHOD
PROCEDE DE DETECTION AUTOMATIQUE DE DEFAUTS SUPERFICIELS AU NIVEAU DE CARROSSERIES BRUTES ET DISPOSITIF PERMETTANT DE METTRE LEDIT PROCEDE EN OEUVRE

(30) Priorität: 18.07.1997 DE 19730885
(43) Veröffentlichungstag der Anmeldung: 26.04.2000
(73) Patentinhaber: AUDI AG, 85045 Ingolstadt (DE)
(72) Erfinder: ALDERS, Klaus, D-85095 Denkendorf (DE); LEHE, Martina, D-85134 Stammham (DE); WAN, Gang, D-86633 Neuburg (DE)
(74) Vertreter: Geissler, Manfred
(86) Internationale Anmeldenummer: EP9804291
(87) Internationale Veröffentlichungsnummer: WO99004248

(56) Entgegenhaltungen:
- EP-A- 0 286 994
- WO-A-87/00629
- WO-A-97/24603
- DE-A- 19 534 145
- GB-A- 2 308 656
- US-A- 5 331 169

## Beschreibung

Die Erfindung betrifft ein Verfahren zur automatischen Erkennung von Oberflächenfehlern an Rohkarosserien nach dem Oberbegriff des Anspruchs 1 und eine Vorrichtung zur Durchführung des Verfahrens nach dem Oberbegriff des Anspruchs 10.

Rohbaukarosserien, die vom Karosserierohbau an die Lackieranlage weitergeleitet werden, haben regelmäßig Oberflächenfehler, die ohne Nachbearbeitung nach der Lackierung von einem Kunden als qualitätsmindernde Fehler erkannt werden würden. Es ist daher erforderlich, solche Oberflächenfehler an Rohkarosserien festzustellen und nachzuarbeiten.

Bisher werden in der Serienproduktion relevante Oberflächenfehler subjektiv durch eine Prüfperson erkannt und beurteilt, insbesondere durch Fühlen mit Handschuhen, durch Visualisierung von verschiedenen Blickrichtungen und ggf. durch Abziehen mit einem Schleifstein, wenn die Prüfperson die Erfahrung hat, daß an bestimmten Stellen eines Rohkarosserientyps oft Oberflächenfehler auftreten.

Solche Oberflächenfehler können Dellen/Beulen, Einfall/Eindrückungen, Punktspritzer/Lötporen sowie Unebenheiten/Welligkeiten, etc. sein. Die geometrischen Einflußgrößen bei der Beurteilung sind Tiefe, Ausdehnung, Gradienten, Oberflächenkrümmungen, örtliche Frequenzen von Wellungen und Positionen von Oberflächenfehlern. Die Beurteilung, ob ein Oberflächenfehler für eine Nachbearbeitung relevant ist, hängt regelmäßig von der Beurteilung einer Kombination der vorstehend genannten Einflußgrößen ab; z. B. wird eine Delle mit einer Tiefe 20 µm bei einer Ausdehnung von 50 mm leicht erkannt und muß nachgearbeitet werden, während eine Delle mit gleicher Tiefe bei einer Ausdehnung von 200 mm regelmäßig nicht mehr als qualitätsmindernder Oberflächenfehler erkannt wird und somit keine Nacharbeit erforderlich ist. Solche Kombinationen und Relationen von Einflußfaktoren werden bei der subjektiven Beurteilung durch eine Prüfperson zwangsläufig durchgeführt, wobei zwischen den verschiedenen, durch solche Kombinationen vorliegenden, relevanten Oberflächenfehlern keine scharfen Grenzen bestehen.

Aufgrund der vorstehenden komplexen und unterschiedlichen Fehlermuster war bisher eine automatisierte, maschinelle Erkennung solcher relevanter Oberflächenfehler bisher nicht möglich.

Zudem ist die Oberfläche von Rohkarosserien aus dem Rohbau oft mit einem Ölfilm überzogen, matt, diffus und verschmutzt, was die subjektive Erkennung von Oberflächenfehlern durch eine Prüfperson und ebenso eine automatisierte Erkennung erschwert. Nicht erkannte, relevante Oberflächenfehler an der Rohbaukarosserie werden dann erst nach der Grundlackierung erkannt, wo eine weitere Überprüfung erforderlich ist. Ersichtlich ist der Aufwand für eine Nacharbeit an Oberflächenfehlern um so größer, je weiter die Karosserie bereits im Herstellungsprozeß, insbesondere im Lackierprozeß fortgeschritten ist.

Um den hohen Aufwand für die Erkennung von relevanten Oberflächenfehlern und für eine regelmäßige, späte Nachbearbeitung nach der Grundlackierung zu reduzieren, wurden bereits eine Reihe von Anstrengungen und Versuchen durchgeführt, um eine Erkennung von relevanten, eine Nacharbeit benötigende Oberflächenfehler durch Meßeinrichtungen und Maschinen zu automatisieren, wobei möglichst alle relevanten Oberflächenfehler bereits vor der Lackierung erkannt werden sollen.

Bekannte Systeme arbeiten beispielsweise mit Streifenprojektionsverfahren oder auf der Grundlage der Moiré-Interferometrie, wo mit Hilfe von Phasenshift-Verfahren ausreichende Meßgenauigkeiten von ca. 10 µm erreichbar sind. Allerdings benötigen diese Verfahren für die Erfassung und Auswertung einer Fläche von ca. 250 mm x 250 mm eine Zeit von ca. 1 Minute. Damit sind diese Meßverfahren für die Serienproduktion erheblich zu langsam, wo eine übliche Förderbandgeschwindigkeit für Rohkarosserien bei ca. 4 m pro Minute liegt.

Ein dazu alternatives, bekanntes Verfahren mit der Bezeichnung Retroreflex-Verfahren wurde ebenfalls zur Erkennung von Oberflächenfehiern an Rohkarosserien getestet. Bei diesem Verfahren strahlt ein Lichtbündel auf die Oberfläche der Rohkarosserie. Die Strahlung wird im Einfallswinkel von einem Retroreflektor reflektiert, der senkrecht zur Prüfoberfläche positioniert ist. Durch mehrfache Reflexion des Lichtstrahls werden Oberflächenfehler ausgeprägt dargestellt und sind dadurch mit relativ einfachen Bildverarbeitungsfunktionen zu detektieren. Dieses Verfahren ist allerdings nachteilig nur unter Einsatz eines Glanzmittels möglich. Dieses Glanzmittel ist vor der Erfassung und Erkennung auf die Oberfläche aufzutragen und nach der Erkennung wieder abzuwaschen. Dies stellt einen aufwendigen, zusätzlichen Arbeitsgang mit Kosten für das Glanzmittel dar. Zudem ist das Glanzmittel eine umweltschädliche Chemikalie mit dem Problem der Entsorgung. Somit scheidet auch dieses Verfahren für den Einsatz in der Serienproduktion aus.

Es sind weiter eine Vorrichtung und ein Verfahren zur Inspektion spiegelnder und halbspiegelnder Oberflächen, insbesondere an lackierten Autokarosserien in einer automatischen Produktionslinie bekannt [DE 195 34 145 A1]. Zur Verbesserung des Inspektionsergebnisses durch Augenschein werden Oberflächen der Autokarosserie abschnittweise beleuchtet.

Zudem sind ein Verfahren und eine Vorrichtung zur Erkennung von Oberflächenfehlern, insbesondere an Kraftfahrzeugkarosserien bekannt (EP 0 286 994 A2), bei denen reflektiertes Licht aus streifenförmigen Abschnitten der Oberfläche mittels Kameras erfaßt und schrittweise aufgezeichnet wird. Bei einem ähnlichen, bekannten Verfahren und einer ähnlichen bekannten Vorrichtung (GB 2 308 656 A) werden helle und dunkle Streifenmuster auf eine Karosserieoberfläche projiziert, deren reflektiertes Licht mittels einer Kameravorrichtung erfaßt und entsprechende Meßsignale einer Rechneranlage zugeführt werden. Durch Auswertung dieser Meßsignale werden von der Rechneranlage Oberflächenfehler erkannt. Bei beiden vorstehend geschilderten Verfahren und Vorrichtungen wird ein Oberflächenfehler auf einem Monitor angezeigt und es ist erforderlich, daß eine Prüfperson den Oberflächenfehler auf der tatsächlichen Fahrzeugkarosserie dann findet und erkennt, wobei die Monitordarstellung eine Suchhilfe darstellt.

Aufgabe der Erfindung ist es, ein Verfahren zu einem höheren Automatisierungsgrad in Verbindung mit der Erkennung von Oberflächenfehlern, die einer Nacharbeit bedürfen, zu schaffen, das für eine Serienproduktion geeignet ist sowie eine Vorrichtung zur Durchführung des Verfahrens zu schaffen.

Die Aufgabe wird hinsichtlich des Verfahrens mit den Merkmalen des Anspruchs 1 gelöst.

Gemäß Anspruch 1 wird eine Rohkarosserie auf einem Fördermittel gesteuert durch eine optische Meßvorrichtung transportiert. Diese optische Meßvorrichtung erzeugt mittels einer Projektionsvorrichtung einen etwa quer zur Förderrichtung verlaufenden, scheibenförmigen Lichtvorhang, durch den eine Rohkarosserie transportiert wird. Dabei wird jeweils ein in einer Querebene der Rohkarosserie liegender Meßstreifen der Oberfläche bestrahlt.

Die Projektionsvorrichtung strahlt eine Gitterstruktur ab, so daß der Meßstreifen entsprechend mit einem definierten Gitterbild aus hellen und dunklen Gitterpunkten, bevorzugt in schwarz-weiß, bestrahlt wird.

Weiter erfaßt die Meßvorrichtung mittels einer Kameravorrichtung vom bestrahlten Meßstreifen reflektiertes Licht als Abbildung der Gitterbildpunkte unter einem definierten Winkel. Die von der Kameravorrichtung detektierte Lage und Gestalt der Abbildung der reflektierten Gitterbildpunkte, die regelmäßig eine Verschiebung und Verzerrung gegenüber dem abgestrahlten Gitter darstellt, wird als Meßsignal einer Rechneranlage zugeführt.

In der Rechneranlage werden auf der Grundlage des Meßsignals mit an sich bekannten Triangulationsmethoden ggf. unter Berücksichtigung von räumlichen Phasenverschiebungen Oberflächenunebenheiten bestimmt. Durch Vergleich mit im Rechner abgelegten Fehlermustern werden solche Oberflächenunebenheiten als relevante, eine Nacharbeit erfordernde Oberflächenfehler erkannt.

Mit diesem Verfahren wird vorteilhaft beim Transport der Rohkarosserie durch die optische Meßvorrichtung eine vollständige Erfassung der 3D-Oberflächen der Rohkarosserie erreicht. Durch die verwendete Streifenprojektion und Auswertung eines Meßstreifens und den Einsatz einer CCD-Kamera wird eine Online-Erfassung der 3D-Oberfläche unter den Betriebsbedingungen und mit den Bandgeschwindigkeiten in der Serienproduktion möglich. Anstelle von Normallicht kann ggf. auch ein Laser-Einstreifen-Projektionsverfahren verwendet werden, bei dem ein Laserstrahl auf die Oberfläche projeziert und mit Hilfe einer CCD-Kamera (Flächenkarneras bzw. Videokameras) aufgenommen wird. In einer aufwendigeren Lösung kann auch eine Zeilenkamera verwendet werden.

Damit wird vorteilhaft eine vollständige und genaue Oberflächenerkennung, insbesondere vor der Lackierung, möglich. Diese Fehler werden vorteilhaft mit den vorgeschlagenen Meßverfahren an Rohkarosserien erkannt, die unmittelbar aus dem Rohbau kommen, wo die zu vermessenden Karosserieoberflächen regelmäßig diffus, matt mit unterschiedlichen Farben und oft verschmutzt sind. Durch die vollständige und genaue Erkennung von Oberflächenfehlern vor der Lackierung sind aufwendige Nacharbeiten beim oder nach dem Lackierprozeß weitgehend reduziert, so daß insgesamt bei gesteigerter Qualität geringere Kosten entstehen. Die anfallenden großen Datenmengen sind insbesondere durch die Verwendung der Streifenprojektion und der CCD-Kameras bei hohen Karosseriedurchgangsgeschwindigkeiten von bis zu 5m/min verarbeitbar.

Die ermittelten Koordinatendaten für als relevant erkannte Oberflächenfehler werden nicht nur ausgegeben oder gespeichert, sondern an eine, der Meßvorrichtung nachgeordnete Markiervorrichtung gegeben. Dort wird über steuerbare Markierdüsen entsprechend der ermittelten Koordinatendaten selbsttätig eine entsprechende Markierung der Oberflächenfehler auf die Rohkarosserie aufgebracht. Anschließend können die so markierten, relevanten Oberflächenfehler einfach nachgearbeitet werden. Eine solche selbsttätige Markierung ergibt eine wesentliche Arbeitsvereinfachung und Prüfpersonen, die zudem Oberflächenfehler begutachten, können weitgehend eingespart werden.

Vorteilhaft bestehen die Projektionsvorrichtung aus mehreren den durchgehenden Meßstreifen jeweils angrenzend bestrahlenden Strahlern und die Kameravorrichtung aus mehreren den Meßstreifen angrenzend erfassenden CCD-Kameras. Die Strahler und die CCD-Kameras werden dabei gemäß Anspruch 2 im Abstand und Winkel zu dem gerade erfaßten Meßstreifen an der Karosserieoberfläche so gesteuert, daß sie jeweils in einem Abstandsfenster zur Karosseriekontur liegen und/oder ein geeigneter Reflexionswinkel gebildet wird.

Gemäß Anspruch 3 wird eine solche Steuerung vorteilhaft dadurch möglich, daß die Strahler und CCD-Kameras an seitlichen Portalstehern eines Portals verschwenkbar sind und ein oberer Portalquerträger, der ebenfalls Strahler und CCD-Kameras trägt, entsprechend der Höhenkontur einer Rohkarosserie gesteuert verstellt wird.

Zweckmäßig wird für jeden Fahrzeugtyp und dessen Ausführung, z. B. mit zwei Türen, einem Schiebedach, etc. ein Prüfplan in der Rechenanlage abgelegt, in dem insbesondere die Oberflächenkontur und ggf. systembedingte Oberflächenfehler dieses Fahrzeugtypes berücksichtigt sind. Zur Ansteuerung dieses Prüfplans wird gemäß Anspruch 4 vorgeschlagen, über einen Sensor den Anfang der Rohkarosserie sowie aus einem Fahrzeugdatenträger die entsprechenden Daten an die Rechenanlage zur Aktivierung des zugeordneten Prüfplans zu geben.

Mit der optischen Meßvorrichtung werden Meßdaten der Oberflächenfehler, wie Tiefe, Ausdehnung, örtliche Frequenz mehrerer, beieinanderliegender Oberflächenfehler und die Lage der Oberflächenfehler an der Rohkarosserie erfaßt. Diese Meßdaten werden gemäß Anspruch 5 mit den Daten für abgelegte Fehlermuster verglichen, wobei zusätzlich typische Oberflächenfehler aus dem Bearbeitungsprozeß und zeitliche Häufigkeiten von Oberflächenfehlern in den abgelegten Fehlermustern berücksichtigt werden. Erst durch eine Relation und Kombination dieser Daten erfolgt eine Auswertung und Bestimmung, ob es sich entsprechend einem abgelegten Fehlermuster um einen relevanten, eine Nacharbeit erfordernden Oberflächenfehler handelt. Ein einziger Grenzwert der vorstehend angegebenen Oberflächenfehler ist für eine erforderliche Nacharbeit regelmäßig nicht aussagefähig.

Um der Rechenanlage die Möglichkeit zur Auswahl relevanter Oberflächenfehler zu geben, wird mit Anspruch 6 vorgeschlagen, Oberflächenfehler, die von einer Prüfperson als relevant erkannt werden, meßtechnisch zu erfassen und diese mit den Meßdaten entsprechend der vorstehenden Kriterien im Rechner als ein Fehlermuster abzulegen. Nach einer Mehrzahl subjektiv erfaßter Oberflächenfehler durch eine Prüfperson und die Übernahme der entsprechenden objektiv erfaßten Daten als Fehlermuster in die Rechenanlage wird dort ein Katalog von Fehlermustern aufgebaut, die durch das Meßsystem in Verbindung mit der Rechenanlage objektiv erkannt werden.

Um die große Anzahl von anfallenden Daten in der kurzen, zur Verfügung stehenden Zeit auswerten zu können, wird mit Anspruch 7 vorgeschlagen, die Auswertung durch eine Rechenanlage in einem Rechnerverbund vorzunehmen, der die Rechenoperationen mit einem Steuerrechner, einem Meßrechner und einem Auswertungsrechner durchführt, die bevorzugt in einer Netzstruktur mit Glasfaserkabeln verbunden sind. Zudem wird gemäß Anspruch 8 eine Software vorgeschlagen, die auf der Technik der künstlichen Intelligenz basiert, wobei Oberflächenfehler bei der Auswertung entsprechend der Fuzzy Logic unscharf abgebildet, klassifiziert und ggf. korrigiert werden. Weiter soll nach Anspruch 9 eine lemfähige Software verwendet werden, so daß neue Fehlertypen als Fehlermuster einfach ergänzt werden können oder in einem Selbstlernprozeß selbsttätig aufgebaut werden.

Die Aufgabe der Erfindung wird hinsichtlich der Vorrichtung mit den Merkmalen des Anspruch 10 gelöst.

Gemäß Anspruch 10 wird eine Vorrichtung zur automatischen Erkennung von Oberflächenfehlern an Rohkarosserien in der Serienproduktion vorgeschlagen, die aus einem Fördermittel zum Transport von Rohkarosserien und einer optischen Meßvorrichtung besteht, die das Fördermittel quer zu dessen Förderrichtung mit einer Tragstruktur umgibt.

Die optische Meßvorrichtung besteht aus einer Projektionsvorrichtung aus Strahlern und einer Kameravorrichtung aus CCD-Kameras, die an der Tragstruktur angeordnet sind und die auf eine, durch die optische Meßvorrichtung transportierbare Rohkarosserie gerichtet sind, wobei die Strahler den scheibenförmigen Lichtvorhang mit dem definierten Gitterbild als Meßstreifen auf der Oberfläche der Rohkarosserie erzeugen. Die CCD-Kameras erfassen entsprechend das reflektierte Licht als Abbildung der Gitterpunkte. Weiter besteht die Vorrichtung aus einer Rechenanlage zur Bestimmung und Erkennung relevanter, eine Nacharbeit erfordernde Oberflächenfehler, wobei die Rechneranlage mit den Strahlern und CCD-Kameras zur Signalübertragung verbunden ist. Zudem ist der optischen Meßvorrichtung eine Markiervorrichtung nachgeordnet, durch die ebenfalls das Fördermittel führt. Die Markiervorrichtung umfaßt eine ähnliche Tragstruktur wie die optische Meßvorrichtung, wobei diese Tragstruktur ebenfalls als Portal mit zwei seitlichen Portalstehern und wenigstens einen über die Rechneranlage gesteuert höhenverstellbaren Portalquerträger ausgeführt ist. An der Tragstruktur sind gesteuert bewegbare und auslösbare Markierdüsen angebracht, die mit wasserlöslicher Farbe zur Markierung von relevanten Oberflächenfehlern beschickbar sind. Mit einer solchen Vorrichtung ist das vorstehend erwähnte Verfahren nach Anspruch 1 mit den dort aufgezeigten Vorteilen durchführbar. Insbesondere ist eine solche Vorrichtung in ihrer Anordnung relativ einfach und platzsparend ausführbar.

Wesentlich für die Genauigkeit des optischen Meßverfahrens ist unter anderem ein erschütterungsfreier und kontinuierlicher Durchgang der Rohkarosserie durch die optische Meßvorrichtung. Dazu wird mit Anspruch 11 als Transportmittel ein kontinuierlich stabil und ruhig laufendes Förderband vorgeschlagen, das gemäß Anspruch 12 an beiden Seitenbereichen je über eine feingliedrige Förderkette bewegbar ist.

Nach Anspruch 13 wird als Tragstruktur für die Anordnung der Strahler und CCD-Kameras ein Portal mit wenigstens zwei Portalstehern und einem oberen Portalquerträger vorgeschlagen, wodurch eine günstige räumliche sowie stabile Anordnung erreicht wird. Bevorzugt werden dabei jeweils ein Strahler und eine zugeordnete CCD-Kamera an den Portalstehern und ein Strahler und eine zugeordnete CCD-Kamera in der Mitte des Portalquerträgers angeordnet. Weiter werden jeweils ein Strahler und eine zugeordnete CCD-Kamera in einem schräg zur Portalmitte hin angestellten Seitenbereich des Portalquerträgers angeordnet. Für einen günstigen Reflexionswinkel wird zudem mit Anspruch 14 vorgeschlagen, jeweils einen Strahler und eine zugeordnete CCD-Kamera in gleicher Höhe und in Förderrichtung der Rohkarosserie versetzt am Portal anzubringen.

Für geeignete Meßabstände und Reflexionswinkel wird zudem mit Anspruch 15 vorgeschlagen, die Strahler und/oder CCD-Kameras gesteuert schwenkbar und/oder Teile der Tragstruktur, bevorzugt den Portalquerträger gesteuert verlagerbar anzuordnen. Die jeweilige Ansteuerung erfolgt über den in der Rechneranlage abgelegten Prüfplan für den jeweiligen Karosserietyp.

Nach Anspruch 16 umfaßt die Vorrichtung zudem Sensoren, z. B. optische Sensoren zur Erfassung des Anfangs und der Lage der Rohkarosserie und zur Erfassung von Karosseriedaten über einen Fahrzeugdatenträger. Diese Sensoren sind mit der Rechenanlage verbunden.

Für einen variablen Einsatz der gesamten Vorrichtung wird mit Anspruch 17 vorgeschlagen, das Fördermittel und die optische Meßvorrichtung und/oder die Markiervorrichtung als Containereinheit auszubilden. Damit kann diese Einheit in der Prozeßkette sowie in unterschiedlichen Fertigungswerken variabel eingesetzt und einfach transportiert werden.

Da möglicherweise Streulicht die Meßergebnisse verfälschen kann, wird gemäß Anspruch 18 wenigstens im Bereich der optischen Meßvorrichtung eine diese umgebende Abdeckung, bevorzugt ein lichtundurchlässiger Vorhang angebracht. Im Ein- und Austrittsbereich der Rohkarosserien sind entsprechend große Öffnungen freizuhalten.

Die Vorrichtung wird bevorzugt in der Prozeßkette zwischen Rohbau-Fein-Finish und Grundlackierung, ggf. vor oder nach einer Wascheinrichtung eingeschaltet. Damit wird sichergestellt, daß schon vor der Lackierung relevante Oberflächenfehler automatisiert erkannt und ausgebessert werden, und zudem keine Verunreinigungen, wie Schleifreste, etc. in die Lackierung eingebracht werden.

Anhand einer Zeichnung wird eine Ausführungsform der Erfindung näher erläutert.

Es zeigen:
- Fig. 1: ein Flußdiagramm des Verfahrens, und
- Fig. 2: eine perspektivische Ansicht einer entsprechenden Vorrichtung.

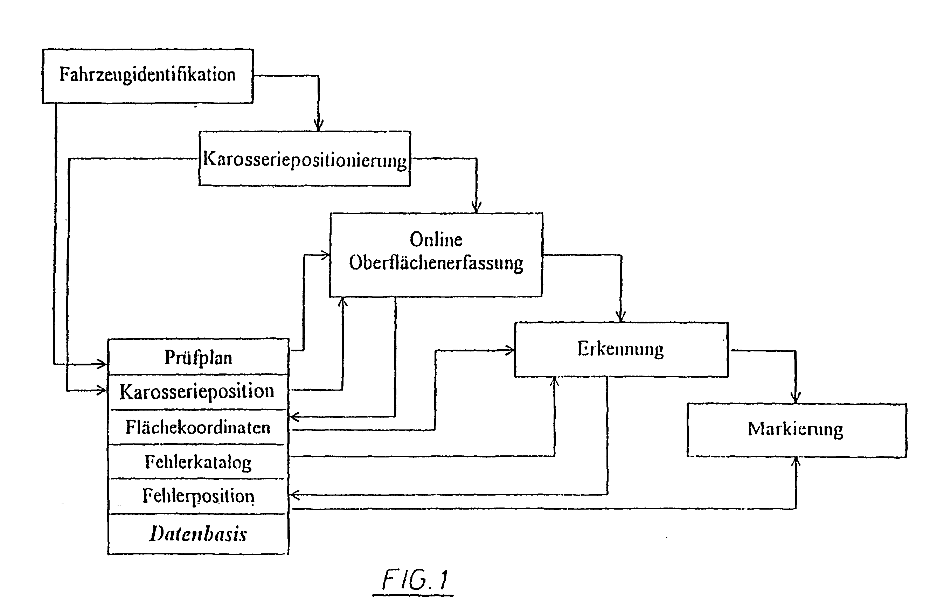

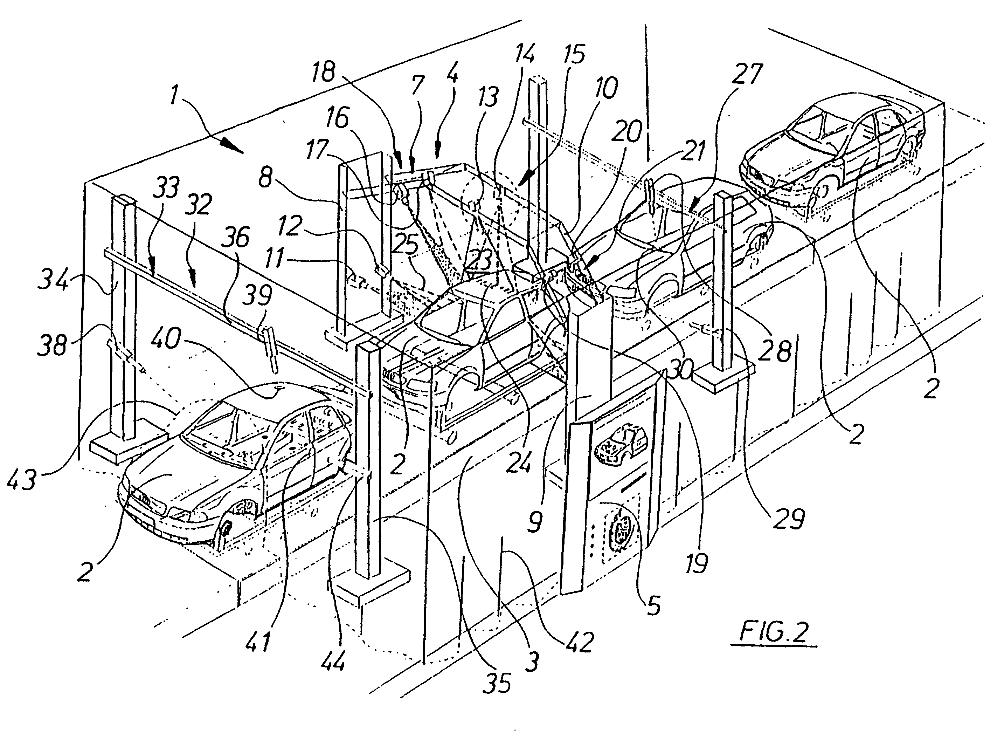

In der Fig. 1 ist ein Flußdiagramm eines Verfahrens zur automatischen Erkennung von Oberflächenfehlern an Rohkarosserien gezeigt, bei dem eine Rohkarosserie auf einem Fördermittel gesteuert durch eine Vorrichtung zur Durchführung dieses Verfahrens (Fig. 2) transportiert wird.

Wie dem Flußdiagramm zu entnehmen ist, wird zuerst eine Fahrzeugidentifikation vorgenommen. Dabei werden die auf einem an der Rohkarosserie befestigten Fahrzeugdatenträger enthaltenen Karosseriedaten bezüglich des jeweiligen Fahrzeugtyps und dessen Ausführung über einen Sensor einer Sensoreinrichtung erfaßt. Im Anschluß daran oder aber auch gleichzeitig mit der Fahrzeugidentifikation wird im Rahmen einer Karosseriepositionierung über einen weiteren Sensor der Sensoreinrichtung der Anfang der Rohkarosserie bestimmt. Diese Daten werden schließlich einer Rechenanlage zugeführt und dadurch ein auf den jeweiligen Fahrzeugtyp abgestimmter Prüfplan, der in der Rechenanlage abgelegt ist, aktiviert.

Dieser Prüfplan ist Teil einer Datenbasis der Rechneranlage, die zur Auswertung einer in kurzer Zeit anfallenden, großen Datenmenge als Rechnerverbund aus Steuerrechner, Meßrechner und Auswertungsrechner aufgebaut ist.

An die Karosseriepositionierung schließt sich eine Online-Obertlächenerfassung an. Diese wird mit Hilfe einer optischen Meßvorrichtung durchgeführt und dient der vollständigen Erfassung der 3D-Oberflächen der Rohkarosserie. Dazu umfaßt die optische Meßvorrichtung eine Projektionsvorrichtung mit mehreren Strahlern und eine Kameravorrichtung mit mehreren CCD-Kameras.

Im einzelnen wird hierbei durch die Strahler ein quer zur Förderrichtung verlaufender, scheibenförmiger Lichttunnel als Lichtvorhang erzeugt, durch den die Rohkarosserie transportiert wird. Dabei wird durch die Strahler jeweils ein in einer Querebene der Rohkarosserie liegender Meßstreifen der Oberfläche der Rohkarosserie bestrahlt. Die Strahler strahlen eine Gitterstruktur ab, so daß der Meßstreifen der Oberfläche der Rohkarosserie mit einem definierten Gitterbild aus helleren und dunkleren Gitterbildpunkten bestrahlt wird. Das vom bestrahlten Meßstreifen reflektierte Licht wird als Abbildung der Gitterbildpunkte unter einem definierten Winkel von den CCD-Kameras erfaßt. Die von den CCD-Kameras ermittelte Lage und Gestalt der Abbildung der reflektierten Gitterbildpunkte, die in der Regel eine Verschiebung und Verzerrung gegenüber dem abgestrahlten Gitter darstellt, wird der Rechneranlage als Meßsignal zugeführt.

Für geeignete Meßabstände und Reflexionswinkels ist es hierbei erforderlich, daß die Strahler und CCD-Kameras jeweils einen vorbestimmten Abstand und Winkel zur Karosseriekontur aufweisen. Dazu werden sie über die Rechneranlage konturgesteuert verstellt. In der Rechneranlage können dann auf der Grundlage dieses Meßsignals mit an sich bekannten Triangulationsmethoden, ggf. unter Berücksichtigung von räumlichen Phasenverschiebungen evt. Oberflächenunebenheiten ermittelt und über entsprechend zugeordnete Flächenkoordinaten auf der Rohkarosserie lokalisiert werden.

Die Auswertung dieser ermittelten Oberflächenunebenheiten und damit die Feststellung, ob es sich um einen nachzuarbeitenden Oberflächenfehler handelt, erfolgt im Rahmen einer auf die Online-Datenerfassung folgenden Erkennung. Dort werden durch einen Vergleich mit im Rechner abgelegten Fehlermustern eines Fehlerkatalogs bestimmte Oberflächenunebenheiten als eine Nacharbeit erfordernde Oberflächenfehler erkannt.

Im einzelnen werden dabei die mit der optischen Meßvorrichtung erfaßten Meßdaten der Oberflächenunebenheiten, wie Tiefe, Ausdehnung, örtliche Frequenz mehrerer, beieinanderliegender Oberflächenunebenheiten und die Lage der Oberflächenunebenheiten an der Rohkarosserie mit den entsprechenden Daten für die abgelegten Fehlermuster verglichen. Außerdem werden in den Daten für abgelegte Fehlermuster zusätzlich typische Oberflächenfehler aus dem Bearbeitungsprozeß und zeitliche Häufigkeiten von Oberflächenfehlern berücksichtigt und damit dem Vergleichs- und Auswertungsprozeß zugrundegelegt. Erst nachdem dieser Datenvergleich erfolgt ist, werden bestimmte Oberflächenunebenheiten als eine Nacharbeit erfordernde Oberflächenfehler ermittelt. Ein einziger Grenzwert der vorstehend angegebenen Oberflächenfehler ist für eine erforderliche Nacharbeit in der Regel nicht aussagefähig.

Zur Zusammenstellung eines derartigen Fehlerkatalogs werden von einer Prüfperson als relevant erkannte Oberflächenfehler meßtechnisch erfaßt und in der Rechneranlage als Fehlermuster abgelegt. Nach einer Mehrzahl subjektiv erfaßter Oberflächenfehler durch eine Prüfperson und die Übernahme der entsprechenden objektiv erfaßten Daten als Fehlermuster in die Rechenanlage wird dort schließlich ein Katalog von Fehlermustern aufgebaut, die durch das Meßsystem in Verbindung mit der Rechenanlage objektiv erkannt werden.

Die Software zur Fehlererkennung basiert auf der Technik der künstlichen Intelligenz, die Oberflächenfehler unscharf abbildet, klassifiziert und ggf. korrigiert. Dabei wird die Stärke der Fuzzy-Theorie in der Lösung von komplexen Entscheidungsproblemen ausgenutzt. Wesentlich sind dabei die unscharfen Mengen, sog. Fuzzy-Sets, von Faktoren, die die Entscheidung beeinflussen, und die Verknüpfung, die eine fließende Klassifizierung für die Beurteilung ermöglicht.

Weiter wird eine lernfähige Software verwendet, so daß neue Fehlertypen als Fehlermuster einfach ergänzt werden können oder in einem Selbstlernprozeß selbsttätig aufgebaut werden. Eine derartige Lernfähigkeit des Systems ermöglicht die Technik der künstlichen Intelligenz. Anhand der z. B. von einer Prüfperson erkannten Oberflächenfehler werden die Fehler quantifiziert, analysiert und klassifiziert. Die Menge der eingelernten Beispiele trägt zu einer Zunahme des Wissenstands bei, so daß das System immer intelligenter wird. Die Realisierung eines Systems mit künstlicher Intelligenz unterteilt sich dabei in der Teilschritte der Extraktion der Merkmale der Oberflächenfehler, der Konzeption der Fehlerklasse, der Lernphase und schließlich der Integration.

Während der Realisierung der Software werden die typischen Oberflächenfehler der Karosserietypen erfaßt. Die Merkmale dieser Oberflächenfehler werden analysiert, so daß eine grobe Klassifizierung des Fehlerspektrums entsteht. Nach der Installation der Software folgt die Lernphase, bei der die Oberflächenfehler von mehreren Karosserien vorerst von verschiedenen Prüfpersonen markiert werden. Das System nimmt die Fehler auf, analysiert sie und ergänzt den Fehlerkatalog des Typs. Danach werden weitere Karosserien vom System inspiziert und von den Prüfpersonen nachgeprüft. Dabei werden die nicht relevanten Fehler nochmals markiert und dem System mitgeteilt. Dies dient zur Optimierung der Klassifizierung. Damit können nach der Integration des Systems neue Fehlertypen eingelernt werden. Die Fehler werden dabei nach Häufigkeit sortiert, so daß oft auftretende Fehler schneller erkannt werden.

Die Position der erkannten Fehler wird nach dem Erkennungsprozeß über die Rechneranlage an eine der Meßvotrichtung nachgeordnete Markiervorrichtung weitergegeben. Dort wird über steuerbare Markierdüsen entsprechend der ermittelten Fehlerkoordinatendaten eine entsprechende Markierung der Oberflächenfehler auf die Rohkarosserie aufgebracht. Die Markierung erfolgt dabei mit wasserlöslicher Farbe.

Die so markierten Oberflächenfehler können nunmehr in einer der Markierungseinheit nachgeschalteten Stufe auf einfache Weise nachgearbeitet werden. Sobald eine Rohkarosserie die optische Meßvorrichtung durchlaufen hat, wird die dieser nachfolgende Rohkarosserie mittels der Meßvorrichtung auf die gleiche Art und Weise auf Oberflächenfehler hin untersucht.

Durch die in diesem Verfahren verwendete Streifenprojektion und Auswertung eines Meßstreifens sowie den Einsatz einer CCD-Kamera ist eine Online-Oberflächenerfassung unter den Betriebsbedingungen und mit den Bandgeschwindigkeiten in der Serienproduktion möglich.

Eine perspektivische Ansicht einer Vorrichtung 1 zur Durchführung eines Verfahrens zur automatischen Erkennung von Oberflächenfehlern an Rohkarosserien 2 ist in der Fig. 2 dargestellt.

Diese Vorrichtung 1 umfaßt im wesentlichen ein Förderband 3 zum Transport von Rohkarosserien 2, eine Sensoreinrichtung 27, eine optische Meßvorrichtung 4, eine Rechneranlage 5 sowie eine Markierungseinrichtung 32.

Für die Genauigkeit des optischen Meßverfahrens ist ein erschütterungsfreier und kontinuierlicher Durchgang der Rohkarosserie 2 durch die optische Meßvorrichtung 4 notwendig. Dazu ist das Förderband 3 kontinuierlich, stabil und ruhig laufend ausgebildet und beidseitig je über eine feingliedrige Förderkette, die hier nicht dargestellt ist, bewegbar.

Der optischen Meßvorrichtung 4 ist eine Sensoreinrichtung 27 vorgeordnet, die einen Sensor 29 zur Erfassung des Anfangs der Rohkarosserie 2 und einen Sensor 28 zur Erfassung von Karosseriedaten über einen Fahrzeugdatenträger 30 umfaßt. Diese Sensoren 28, 29 sind mit der Rechneranlage 5 verbunden, die als Rechnerverbund aufgebaut ist und große Datenmengen in kurzer Zeit verarbeitet. Im einzelnen umfaßt die Rechneranlage 5 einen Steuerrechner, einen Meßrechner und einen Auswertungsrechner, die in einer Netzstruktur mit Glasfaserkabeln verbunden sind.

An die Sensoreinrichtung 27 schließt sich in Förderrichtung des Förderbandes 3 die optische Meßvorrichtung 4 an. Diese umgibt das Förderband 3 quer zu dessen Förderrichtung mit einem Portal 7 als Tragstruktur. Das Portal 7 umfaßt jeweils einen zu beiden Seiten des Förderbandes 3 angeordneten Portalsteher 8, 9 und einen über die Rechneranlage 5 gesteuert höhenverstellbaren, oberen Portalquerträger 10. der an den Portalstehern 8, 9 gelagert ist.

An den Portalstehern 8, 9 ist zur Erfassung der Seitenflächen der Rohkarosserie 2 bei deren Durchgang durch die optische Meßvorrichtung 4 jeweils ein Strahler und eine diesem zugeordnete CCD-Kamera angeordnet, von denen in der Fig. 2 lediglich der Strahler 11 und die CCD-Kamera 12 am Portalsteher 8 dargestellt sind. Weiter sind zur Erfassung der Draufsichtflächen im Dachbereich, Motorhaubenbereich und Gepäckraumbereich der Rohkarosserie 2 ein Strahler 13 und eine zugeordnete CCD-Kamera 14 in einem mittleren Bereich 15 des Portalquerträgers 10 sowie jeweils ein Strahler 16 bzw. 19 und eine zugeordnete CCD-Kamera 17 bzw. 20 in einem schräg zur Portalmitte 15 hin angestellten Seitenbereich 18, 21 des Portalquerträgers 10 angeordnet.

Die Strahler 11, 13, 16, 19 und ihre jeweils zugeordneten CCD-Kameras 12, 14, 17, 20 sind dabei jeweils in gleicher Höhe an dem Portal 7 angebracht, wobei die Strahler 11, 13, 16, 19 jeweils in Förderrichtung der Rohkarosserie 2 versetzt vor den CCD-Kameras 12, 14, 17, 20 angebracht sind. Für geeignete Meßabstände und Reflexionswinkel sind die Strahler 11, 13, 16, 19 und die CCD-Kameras 12, 14, 17, 20 über die Rechneranlage 5 gesteuert schwenkbar an dem Portal 7 angeordnet.

Die Strahler 11, 13, 16, 19 bilden einen scheibenförmigen Lichttunnel 23 als Lichtvorhang mit einem definierten Gitterbild aus helleren und dunkleren Gitterbildpunkten als Meßstreifen 24 auf der Oberfläche der Rohkarosserie 2 aus. Die CCD-Kameras 12, 14, 17 und 20 erfassen das von der Oberfläche der Rohkarosserie 2 reflektierte Licht 25 als Abbildung der Gitterpunkte unter einem definierten Winkel und geben ein entsprechendes Meßsignal ab, das an die Rechneranlage 5 weitergeleitet wird. Dort werden unter Verwendung von an sich bekannten Triangulationsmethoden, ggf. unter Berücksichtigung von räumlichen Phasenverschiebungen die eine Nacharbeit erfordernden Oberflächenfehler bestimmt.

Der optischen Meßvorrichtung 4 ist eine Markiervorrichtung 32 nachgeordnet. Diese Markiervorrichtung umfaßt ein Portal 33 als Tragstruktur, das aus zwei jeweils seitlich des Förderbandes 3 angeordneten Portalstehern 34, 35 und einem über die Rechneranlage 5 gesteuert höhenverstellbaren Portalquerträger 36 besteht, der an den Portalstehern 34, 35 gelagert ist An dem Portal 33 sind gesteuert bewegbare und auslösbare Markierdüsen 38, 39, 44 angebracht, die mit wasserlöslicher Farbe zur Markierung von relevanten Oberflächenfehlern 40, 41 beschickt sind. Für eine genaue Fehlerstellenmarkierung darf dabei ein bestimmter Maximalabstand von der Rohkarosserie nicht überschritten werden. Da der Abstand der seitlichen Markierdüsen 38, 44 von den Seitenflächen der Rohkarosserie 2 im wesentlichen stets gleichbleibt, ist lediglich eine konturgesteurte Abstandsanpassung für die Markierdüse 39 erforderlich, die dazu über den Portalquerträger 36 in der Höhe verstellt wird.

Wie dies in der Fig. 2 lediglich schematisch angedeutet ist, ist die Vorrichtung 1 von einem lichtundurchlässigen Vorhang 42 als Abschirmung gegen Streulicht umgeben. Im Ein- und Austrittsbereich der Rohkarosserien 2 sind dazu entsprechend große Öffnungen 43 freigehalten.

Für einen variablen Einsatz der gesamten Vorrichtung 1 kann das Förderband 3, die optische Meßvorrichtung 4 und die Markiervorrichtung 32 als Containereinheit ausgebildet sein. Ein Einsatz einer derartigen Vorrichtung 1 findet bevorzugt in der Prozeßkette zwischen Rohbau-Fein-Finish und Grundlackierung statt.

## Patentansprüche

1. Verfahren zur automatischen Erkennung von Oberflächenfehlern an Rohkarosserien, wobei
eine Rohkarosserie (2) auf einem Fördermittel (3) gesteuert durch eine optische Meßvorrichtung (4) transportiert wird,
die optische Meßvorrichtung (4) mittels einer Projektionsvorrichtung (11, 13, 16, 19) einen etwa quer zur Förderrichtung verlaufenden, scheibenförmigen Lichtvorhang (23) erzeugt, durch den die Rohkarosserie (2) transportiert und dabei jeweils ein in einer Querebene der Rohkarosserie (2) liegender Meßstreifen (24) der Oberfläche der Rohkarosserie (2) bestrahlt wird,
die Projektionsvorrichtung (11, 13, 16, 19) eine Gitterstruktur abstrahlt und entsprechend der Meßstreifen (24) der Oberfläche der Rohkarosserie (2) mit einem definierten Gitterbild aus helleren und dunkleren Gitterbildpunkten bestrahlt wird,
die optische Meßvorrichtung (4) mittels einer Kameravorrichtung (12, 14, 17, 20) vom bestrahlten Meßstreifen (24) der Oberfläche der Rohkarosserie (2) reflektiertes Licht (25) als Abbildung der Gitterbildpunkte unter einem definierten Winkel erfaßt und die von der Kameravorrichtung (12, 14, 17, 20) detektierte Lage und Gestalt der Abbildung der reflektierten Gitterbildpunkte als Meßsignal einer Rechneranlage (5) zugeführt wird, und
daß in der Rechneranlage (5) auf der Grundlage des Meßsignals mit an sich bekannten Triangulationsmethoden Oberflächenunebenheiten bestimmt und durch Vergleich mit abgelegten Fehlermustern als relevante, eine Nacharbeit erfordernde Oberflächenfehler (40, 41) erkannt werden wobei
die Rohkarosserie (2) nach dem Durchgang durch die optische Meßvorrichtung (4) weiter durch eine Markiervorrichtung (32) mit steuerbaren Markierdüsen (38, 39) transportiert wird, wo anhand von ermittelten Koordinatendaten für die als relevant erkannten Oberflächenfehler (40, 41) selbsttätig eine entsprechende Markierung auf die Oberfläche der Rohkarosserie (2) aufgebracht wird.

2. Verfahren nach Anspruch 1, **dadurch gekennzeichnet, daß** mehrere Strahler (11, 13, 16, 19) der Projektionsvorrichtung und mehrere CCD-Kameras (12, 14, 17, 20) und/oder Zeilenkameras der Kameravorrichtung (12, 14, 17, 20) zur gleichzeitigen Erfassung des Meßstreifens (24) auf der Oberfläche der Rohkarosserie (2) von oben und von beiden Seiten an einem quer zum Fördermittel (3) stehenden Portal (7) zur Portalmitte (15) hin gerichtet sind, und in ihrer Lage entsprechend der Karosseriekontur konturgesteuert so verstellt werden, daß sie jeweils in einem Abstandsfenster zur Karosseriekontur liegen und/oder ein geeigneter Reflexionswinkel gebildet wird.

3. Verfahren nach Anspruch 2, **dadurch gekennzeichnet,**
**daß** Strahler (11) und CCD-Kameras (12) an seitlichen ortsfesten Portalstehern (8, 9) des Portals (7) zur Erfassung der beiden Seitenflächen der Rohkarosserie (2) gesteuert verschwenkt werden, und
**daß** Strahler (13, 16, 19) und CCD-Kameras (14, 17, 20) an einen oberen höhenverstellbaren Portalquerträger (10) zur Erfassung der Draufsichtflächen an festen Lagerpunkten gesteuert verschwenkt werden und der Portalquerträger (10) zudem konturgesteuert in seiner Höhe entsprechend der Höhenkontur der Rohkarosserie (2) verstellt wird.

4. Verfahren nach einem der Ansprüche 1 bis 3, **dadurch gekennzeichnet, daß** vor Eintritt in die optische Meßvorriehtung (4) über mit der Rechenanlage (5) verbundene Sensoren (28, 29) der Anfang der Rohkarosserie (2) bestimmt wind und von einem an der Rohkarosserie befestigten Fahrzeugdatenträger (30) Daten über den jeweiligen Fahrzeugtyp und dessen Ausführung an die Rechenanlage (5) gegeben werden, wobei ein dort abgelegter, diesem Fahrzeugtyp und dieser Ausführung zugeordneter Prüfplan aktiviert wird.

5. Verfahren nach einem der Ansprüche 1 bis 4, **dadurch gekennzeichnet,**
**daß** in den abgelegten Fehlermustern als Grenzwerte für relevante, eine Nacharbeit erfordernde Oberflächenfehler (40, 41) Kombinationen aus den folgenden Meßdaten und Systemdaten berücksichtigt sind
- Tiefe der Oberflächenfehler
- Ausdehnung der Oberflächenfehler
- örtliche Frequenz mehrerer beieinanderliegender Oberflächenfehler
- Lage der Oberflächenfehler an der Rohkarosserie
- typische Oberflächenfehler aus dem Bearbeitungsprozess
- zeitliche Häufigkeit, beispielsweise bedingt durch einen
- Werkzeugverschleiß.

6. Verfahren nach Anspruch 5, **dadurch gekennzeichnet,**
**daß** jeweils ein relevanter Oberflächenfehler durch eine subjektive Empfindung eines Prüfers mit dem menschlichen Auge und/oder Tastsinn erfaßt wind, und
**daß** dabei eine Meß- und Auswerteeinrichtung angesteuert wird, die jeweils zu diesern subjektiv erkannten Oberflächenfehler (40, 41) durch die Meßvorrichtung (4) erfaßten objektiven Meßdaten und Systemdaten als ein Fehlermuster zu übernehmen, so daß nach der subjektiven Erfassung einer Mehrzahl von relevanten Oberflächenfehlern (40, 41) ein entsprechender Katalog von in der Rechenanlage abgelegten, objektiv erfassbaren Fehlermustern aufgebaut ist.

7. Verfahren nach einem der Ansprüche 1 bis 6, **dadurch gekennzeichnet, daß** die Oberflächenfehler mittels einer aus einem Rechnerverband, aus einem Steuerrechner, einem Meßrechner und einem Auswertungsrechner bestehenden Rechneranlage (5) ermittelt werden.

8. Verfahren nach einem der Ansprüche 1 bis 7, **dadurch gekennzeichnet, daß** eine zur Erkennung von relevanten Oberflächenfehlern (40, 41) verwendete Software auf der Technik der künstlichen Intelligenz basiert, wobei Oberflächenfehler (40, 41) bei der Auswertung entsprechend der Fuzzy Logic unscharf abgebildet, klassifiziert und korrigiert werden.

9. Verfahren nach einem der Ansprüche 1 bis 8, **dadurch gekennzeichnet, daß** eine zur Erkennung von relevanten Oberflächenfehlern (40, 41) verwendete Software lernfähig ist, so daß neue Fehlertypen ergänzt werden können.

10. Vorrichtung zur automatischen Erkennung von Oberflächenfehlern an Rohkarosserien in der Serienproduktion zur Durchführung des Verfahrens nach Anspruch 1, aufweisend
- ein Fördermittel (3) zum Transport von Rohkarosserien (2),
- eine optische Meßvorrichtung (4), die das Fördermittel (3) quer zu dessen Förderrichtung mit einer Tragstruktur (7) umgibt,
- eine Projektionsvorrichtung aus Strahlern (11, 13, 16, 19) und einer Kameravorrichtung aus CCD-Kameras (12, 14, 17, 20) als Bestandteile der optischen Meßvorrichtung (4), die an der Tragstruktur (7) angeordnet sind und die auf eine auf dem Fördermittel (3) durch die optische Meßvorrichtung (4) transportierbare Rohkarosserie (2) gerichtet sind, zur Erzeugung eines scheibenförmigen Lichtvorhangs (23) mit einem definierten Gitterbild aus helleren und dunkleren Gitterbildpunkten als Meßstreifen (24) auf der Oberfläche der Rohkarosserie (2) mittels der Strahler (11, 13, 16, 19) und zur Erfassung des reflektierten Lichts (25) als Abbildung der Gitterpunkte unter einem definierten Winkel und zur Abgabe eines entsprechenden Meßsignals durch die CCD-Kameras (12, 14, 17, 20),
- eine Rechneranlage (5), die mit den Strahlern (11, 13, 16, 19) und CCD-Kameras (12, 14, 17, 20) verbunden ist und die das Meßsignal unter Verwendung von an sich bekannten Triangulationsmethoden zur Bestimmung relevanter, eine Nacharbeit erfordernde Oberflächenfehler (40, 41) auswertet, wobei
- der optischen Meßvorrichtung (4) eine Markiervorrichtung (32) nachgeordnet ist, die das Fördermittel (3) quer zu dessen Förderrichtung mit einer Tragstruktur (33), bevorzugt mit einem Portal aus wenigstens zwei seitlichen Portalstehern (34, 35) und wenigstens einem über die Rechneranlage (5) gesteuert veriagerbaren Portalquerträger (36) umgibt, und
- die an der Tragstruktur (33) über die Rechneranlage (5) gesteuert bewegbare und auslösbare Markierdüsen (38, 39) aufweist, zur Markierung von Stellen mit erkannten, relevanten Oberflächenfehlern (40, 41) mit wasserlöslicher Farbe.

11. Vorrichtung nach Anspruch 10, **dadurch gekennzeichnet, daß** das Fördermittel (3) ein kontinuierlich stabil und ruhig laufendes Förderband ist.

12. Vorrichtung nach Anspruch 11, **dadurch gekennzeichnet, daß** das Förderband (3) an beiden Seitenbereichen je über eine feingliedrige Förderkette bewegbar ist.

13. Vorrichtung nach einem der Ansprüche 10 bis 12, **dadurch gekennzeichnet, daß** die Tragstruktur ein Portal (7) mit wenigstens zwei seitlichen Portalstehern (8, 9) und wenigstens einem oberen Portalquerträger (10) ist, und sowohl an den seitlichen Portalstehern (8, 9) als auch am oberen Portalquerträger (10) Strahler (11, 13, 16, 19) und CCD-Kameras (12, 14, 17, 20) angeordnet sind, wobei bevorzugt jeweils ein Strahler (11) und eine zugeordnete CCD-Kamera (12) an den Portalstehern (8, 9), ein Strahler (13) und eine zugeordnete CCD-Kamera (14) in der Mitte (15) des Portalquerträgers (10) und jeweils ein Strahler (16, 19) und eine zugeordnete CCD-Kamera (17, 20) in einem schräg zur Portalmitte (15) hin angestellten Seitenbereich (18, 21) des Portalquerträgers (10) angeordnet sind.

14. Vorrichtung nach einem der Ansprüche 10 bis 13, **dadurch gekennzeichnet, daß** jeweils ein Strahler (11, 13, 16, 19) und eine zugeordnete CCD-Kamera (12, 14, 17, 20) in gleicher Höhe und in Förderrichtung der Rohkarosserie (2) versetzt angebracht sind.

15. Vorrichtung nach einem der Ansprüche 10 bis 14, **dadurch gekennzeichnet, daß** die Strahler (11, 13, 16, 19) und/oder CCD-Kameras (12, 14, 17, 20) gesteuert schwenkbar sind und/oder Teile der Tragstruktur (7), bevorzugt ein Portalquerträger (10) gesteuert verlagerbar sind.

16. Vorrichtung nach einem der Ansprüche 10 bis 15, **dadurch gekennzeichnet, daß** der optischen Meßvorrichtung (4) eine Sensoreinrichtung (27) vorgeordnet ist, mit Sensoren (28, 29) zur Erfassung des Anfangs der Rohkarosserie (2) und zur Erfassung von Karosseriedaten über einen Fahrzeugdatenträger (30), und die Sensoren (28, 29) mit der Rechenanlage (5) verbunden sind.

17. Vorrichtung nach einem der Ansprüche 10 bis 16, **dadurch gekennzeichnet, daß** das Fördermittel (3) und die optische Meßvorrichtung (4) und/oder die Markiervorrichtung (32) eine Einheit als Container bilden.

18. Vorrichtung nach einem der Ansprüche 10 bis 17, **dadurch gekennzeichnet, daß** wenigstens im Bereich der optischen Meßvorrichtung (4) eine diese umgebende Abdeckung, bevorzugt ein lichtundurchlässiger Vorhang (42) als Abschirmung gegen Streulicht angebracht ist.

## Claims

1. Method for automatic recognition of surface defects in body shells, whereby a body shell (2) is transported on a conveying means (3) in controlled manner through an optical measuring device (4), the optical measuring device (4) generates by means of a projection apparatus (11, 13, 16, 19) a sheet-shaped light curtain (23) running approximately transverse to the conveying direction, through which the body shell (2) is transported and thereby a measuring strip (24) of the surface of the body shell (2) lying in a transverse plane of the body shell (2) is illuminated, the projection apparatus (11, 13, 16, 19) projects a grid structure and accordingly the measuring strip (24) of the surface of the body shell (2) is illuminated with a defined grid pattern made of lighter and darker grid pattern points, by means of a camera apparatus (12, 14, 17, 20), the optical measuring device (4) detects light (25) reflected from the projected measuring strip (24) of the surface of the body shell (2) as an image of the grid pattern points at a defined angle and the position and form of the image of the reflected grid pattern points detected by the camera apparatus (12, 14, 17, 20) is passed as the measurement signal to a computer system (5), and that in the computer system (5), based on the measurement signal, surface unevennesses are determined with known triangulation methods and by comparison with stored defect patterns are recognised as relevant surface defects (40, 41) requiring rectification, whereby after passing through the optical measuring device (4), the body shell (2) is further transported through a marking apparatus (32) with controllable marking nozzles (38, 39) where, based on determined coordinate data for the surface defects (40, 41) recognised as relevant, suitable marking is applied to the surface of the body shell (2).

2. Method according to Claim 1, **characterised in that** a plurality of projectors of the projection apparatus (11, 13, 16, 19) and a plurality of CCD cameras (12, 14, 17, 20) and/or scanning cameras of the camera apparatus (12, 14, 17, 20) are directed, for simultaneous detection of the measuring strip (24) on the surface of the body shell (2), from above and from both sides, on a portal (7) standing transverse to the conveying means (3) towards the portal centre (15) and are so adjusted in their position according to the body shell contour that they each lie in a separation window to the body shell contour and/or a suitable reflection angle is formed.

3. Method according to Claim 2, **characterised in that** the projectors (11) and the CCD cameras (12) on lateral fixed portal stands (8, 9)of the portal (7) are rotated in controlled fashion for detecting the two side surfaces of the body shell (2), and that the projectors (13, 16, 19) and the CCD cameras (14, 17, 20) on an upper height-adjustable portal transverse beam (10) are rotated in controlled fashion on fixed bearing points for detecting the plan view surfaces and the portal transverse beam (10) is additionally adjusted in contour-related fashion in its height according to the height contour of the body shell (2).

4. Method according to one of the claims 1 to 3, **characterised in that** before entry into the optical measuring device (4), the beginning of the body shell (2) is detected with sensors (28, 29) linked to the computer system (5) and data about the relevant vehicle type and its version is provided to the computer system (5) by a vehicle data carrier (30) attached to the body shell, whereby a checking plan stored in said computer system and allocated to this vehicle type and this version is activated.

5. Method according to one of the claims 1 to 4, **characterised in that** in the stored defect patterns, as limit values for relevant surface defects (40, 41) requiring rectification, combinations of the following measurement data and system data are taken into account
- depth of the surface defects
- extent of the surface defects
- local frequency of several neighbouring surface defects
- position of the surface defects on the body shell
- typical surface defects from the manufacturing process
- chronological frequency caused, for instance, by tool wear.

6. Method according to Claim 5, **characterised in that** a relevant respective surface defect is detected by a subjective impression of a checker with the human eye and/or sense of touch, and that in the process a measuring and evaluation device is controlled, in order to accept the objective measurement data and system data detected by the measuring device (4) for this subjectively recognised surface defect (40, 41) as a defect sample, so that following subjective detection of a plurality of relevant surface defects (40, 41), a suitable catalogue of objectively detectable defect samples is built up in the computer system.

7. Method according to one of the claims 1 to 6, **characterised in that** the surface defects are determined by means of a computer system (5) comprising a computer assembly made up from a control computer, a measuring computer and an evaluation computer.

8. Method according to one of the claims 1 to 7, **characterised in that** software for recognising relevant surface defects (40, 41) is based on artificial intelligence technology, whereby during evaluation surface defects (40, 41) are depicted, classified and corrected in unsharp form in accordance with fuzzy logic.

9. Method according to one of the claims 1 to 8, **characterised in that** software used for recognising relevant surface defects (40, 41) is capable of learning, so that new error types may be added.

10. Device for automatic recognition of surface defects in body shells during mass production for carrying out the method according to Claim 1, having
- a conveying means (3) for transporting the body shells (2),
- an optical measuring device (4) surrounding the conveying means (3) transverse to its conveying direction with a supporting structure (7),
- a projection apparatus comprising projectors (11, 13, 16, 19) and a camera apparatus comprising CCD cameras (12, 14, 17, 20) as components of the optical measuring device (4), which are arranged on the supporting structure (7) and are directed towards a body shell (2) transportable on the conveying means (3) through the optical measuring device (4), for creating a sheet-shaped light curtain (23) with a defined grid pattern made of lighter and darker grid pattern points as a measuring strip (24) on the surface of the body shell (2) by means of the projectors (11, 13, 16, 19) and for detecting the reflected light (25) as an image of the grid pattern points at a defined angle and for supply of a corresponding measurement signal by the CCD cameras (12, 14, 17, 20),
- a computer system (5) which is connected to the projectors (11, 13, 16, 19) and CCD cameras (12, 14, 17, 20) and which evaluates the measurement signal using known triangulation methods for determining relevant surface defects (40, 41) requiring rectification, whereby
- following the optical measuring device (4) is connected a marking apparatus (32) which surrounds the conveying means (3) transverse to its transport direction with a supporting structure (33), preferably with a portal comprising at least two lateral portal supports (34, 35) and at least one portal transverse beam (36) controllably displaceable via the computer system (5), and
- having marking nozzles (38, 39)on the supporting structure (33) controllably movable and actuatable via the computer system (5) for marking sites having known relevant surface defects (40, 41) with water-soluble colour.

11. Device according to Claim 10, **characterised in that** the conveying means (3) is a continuously stably and smoothly-running conveyor belt.

12. Device according to Claim 11, **characterised in that** the conveyor belt (3) is movable on both lateral regions, each via a fine-membered conveyor chain.

13. Device according to one of the claims 10 to 12, **characterised in that** the supporting structure is a portal (7) with at least two lateral portal stands (8, 9) and at least one upper portal transverse beam (10) and both on the lateral portal stands (8, 9) as well as on the upper portal transverse beam are arranged projectors (11, 13, 16, 19) and CCD cameras (12, 14, 17, 20), whereby preferably one projector (11) and one associated CCD camera (12), respectively, are arranged on the portal stands (8, 9), a projector (13) and an associated CCD camera (14) are arranged in the centre (15) of the portal transverse beam (10) and respectively one projector (16, 19) and an associated CCD camera (17, 20) are arranged in a lateral region (18, 21) of the portal transverse beam (10) positioned obliquely to the portal centre (15).

14. Device according to one of the claims 10 to 13, **characterised in that** a projector (11, 13, 16, 19) and an associated CCD camera (12, 14, 17, 20), respectively, are mounted at the same height and offset in the transport direction of the body shell (2).

15. Device according to one of the claims 10 to 14, **characterised in that** the projectors (11, 13, 16, 19) and/or CCD cameras (12, 14, 17, 20) are controllably rotatable and/or parts of the supporting structure (7), preferably a portal transverse beam (10), are controllably displaceable.

16. Device according to one of the claims 10 to 15, **characterised in that** arranged before the optical measuring device (4) is a sensor device (27) with sensors (28, 29) for detecting the start of the body shell (2) and for detecting bodywork data via a vehicle data carrier (30) and the sensors (28, 29) are connected to the computer system (5).

17. Device according to one of the claims 10 to 16, **characterised in that** the conveying means (3) and the optical measuring device (4) and/or the marking apparatus (32) comprise a unit as a container.

18. Device according to one of the claims 10 to 17, **characterised in that**, at least in the region of the optical measuring device (4), a cover surrounding it is applied, preferably a lightproof curtain (42) as screening against scattered light.

## Revendications

1. Procédé de détection automatique de défauts de surface sur des carrosseries brutes, dans lequel
une carrosserie brute (2) est transportée sur un moyen de transport (3), sous la commande d'un dispositif de mesure (4) optique,
le dispositif de mesure (4) optique produit, à l'aide d'un dispositif de projection (11, 13, 16, 19), un rideau lumineux (23), en forme de panneau s'étendant à peu prés transversalement par rapport à la direction de transport, rideau lumineux à travers lequel la carrosserie (2) est transportée et, chaque fois, une bande de mesure (23) placée dans un plan transversal de la carrosserie brute (2), de la surface de la carrosserie brute (2) étant illuminée,
le dispositif de projection (11, 13, 16, 19) émet une structure réticulée et, de manière correspondante aux bandes de mesure (24) de la surface de la carrosserie brute (2), illumine avec un motif en grille défini, formé de points d'image de grille plus clairs et d'autres plus sombres,
le dispositif de mesure (4) optique détecte, à l'aide d'un dispositif à caméra (12, 14, 17, 20), de la lumière (25) réfléchie par la bande de mesure (24) illuminée de la surface de la carrosserie brute (2), en tant qu'illustration des points de l'image à réseau ou grille, sous un angle défini, et
la position, détectée par le dispositif à caméra (12, 14, 17, 20), et la forme de l'illustration des points image en grille réfléchie sont amenés à une installation calculatrice (5), en tant que signal de mesure, et
que, dans l'installation calculatrice (5), en se basant sur le signal de mesure, en utilisant des méthodes par triangulation connues, on détermine des défauts de planéité de la surface et, par comparaison avec des motifs de défaut mémorisés, on identifie comme présentant une importance les défauts de surface (40, 41) nécessitant un travail de retouche, dans lequel
la carrosserie brute (2), après être passée par le dispositif de mesure (4) optique, est transportée par un dispositif de marquage (32) équipé de buses de marquage (38, 39) pouvant être commandées, dans lequel, à l'aide de données de coordonnées ayant été déterminées, concernant les défauts de surface (40, 41) ayant été identifiés comme importants, on applique automatiquement un marquage correspondant sur la surface de la carrosserie brute (2).

2. Procédé selon la revendication 1, **caractérisé en ce que** l'on oriente plusieurs illuminateurs (11, 13, 16, 19) du dispositif de projection et plusieurs caméras à éléments CCD (12, 14, 17, 20) et/ou caméras à lignes de capteur du dispositif à caméra (12, 14, 17, 20) pour obtenir une détection simultanée de la bande de mesure (24) sur la surface de la carrosserie brute (2) par le dessus et depuis les deux côtés, sur un portique (7) placé transversalement par rapport aux moyens de transport (3), l'orientation étant tournée vers le centre de portique (15), et on règle leur position, sous l'effet d'une commande de contour, de manière correspondante au contour de la carrosserie, de manière qu'ils se situent chaque fois dans une fenêtre d'espacement par rapport au contour de la carrosserie et/ou qu'un angle de réflexion approprié soit formé.

3. Procédé selon la revendication 2, **caractérisé en ce que**
l'illuminateur (11) et les caméras à éléments CCD (12) sont montés sur des montants de portique (8, 9) latéraux, localement fixes, du portique (7) pour détecter les deux faces latérales de la carrosserie brute (2), le montage étant un montage pivotant commandé, et
**en ce que** des illuminateurs (11, 13, 16, 19) et des caméras à éléments CCD (12, 14, 17, 20) sont montés sur la traverse de portique (10) supérieure, réglable en hauteur, dans le but de détecter les faces observables en vue de dessus, le montage étant un montage à pivotement commandé, effectué sur des points de tourillonnement fixes, et la traverse de portique (10) étant en plus soumise à une commande de contour concernant sa hauteur, d'une manière correspondante au contour en hauteur de la carrosserie brute (2).

4. Procédé selon l'une des revendications 1 à 3, **caractérisé en ce que**, avant l'entrée dans le dispositif de mesure (4) optique, par l'intermédiaire de capteurs (28, 29) reliés à l'installation calculatrice (5), l'amorce de la carrosserie brute (2) est déterminée et, par un support de données de véhicule (30) fixé à la carrosserie brute, on fournit des données sur le type de véhicule spécifique et sa présentation optionnelle à l'installation calculatrice (5), un plan de contrôle y étant mémorisé, associé à ce type de véhicule et cette présentation optionnelle, étant alors activé.

5. Procédé selon l'une des revendications 1 à 4, **caractérisé en ce que**, dans les motifs de défauts mémorisés, on prend en compte, en tant que valeurs limites pour des défauts de surface (40, 41) importants demandant une retouche, des combinaisons des données de mesure et des données de système suivantes :
- profondeur des défauts de surface
- étendue des défauts de surface
- fréquence locale de plusieurs défauts de surface voisins
- position des défauts de surface sur la carrosserie brute
- défauts de surface typiques issus du processus d'usinage
- fréquence temporelle, de préférence à imputer à une usure de l'outil

6. Procédé selon la revendication 5, **caractérisé en ce que**,
chaque fois, qu'un défaut de surface important est détecté par une sensation subjective d'un contrôleur, à l'oeil humain et/ou utilisant le toucher, et
**en ce qu'**alors un dispositif de mesure et d'évaluation est commandé, prenant chaque fois, en tant que modèle de défaut, des données de mesure et des données de système objectives détectées par le dispositif de mesure (4), relativement à ce défaut de surface (40, 41) identifiés subjectivement, de sorte que, après avoir détecté une pluralité de défauts de surface (40, 41) présentant une importance, un catalogue correspondant de motifs de défaut, détectables objectivement, placés en mémoire dans l'installation calculatrice, est construit.

7. Procédé selon l'une des revendications 1 à 6, **caractérisé en ce que** les défauts de surface sont déterminés à l'aide d'une installation calculatrice (5) formée d'une unité d'ordinateur, d'un calculateur de commande, d'un calculateur de mesure et d'un calculateur d'évaluation.

8. Procédé selon l'une des revendications 1 à 7, **caractérisé en ce qu'**un logiciel, utilisé pour identifier des défauts de surface (40, 41) présentant une importance, est basé sur la technique de l'intelligence artificielle, sachant que des défauts de surface (40, 41) sont illustrés, de façon non nette, classés et corrigés lors de l'évaluation, ceci de manière correspondante à la logique floue.

9. Procédé selon l'une des revendications 1 à 8, **caractérisé en ce qu'**un logiciel, utilisé pour identifier des défauts de surface (40, 41) présentant une importance, est capable d'apprentissage, de sorte que de nouveaux types de défauts peuvent être adjoints en complément.

10. Dispositif d'identification automatique de défauts de surface sur des carrosseries brutes dans la production en série pour la mise en oeuvre du procédé selon la revendication 1, présentant
- un moyen de transport (3) pour transporter des camosseries brutes (2)
- un dispositif de mesure optique (4) entourant par une structure porteuse (7) le moyen de transport (3) transversalement par rapport à sa direction de transport,
- un dispositif de formé d'illuminateurs (11, 13, 16, 19) et d'un dispositif à caméra formé de caméras à éléments CCD (12, 14, 17, 20) en tant que composant du dispositif de mesure (4) optique, disposés sur la structure porteuse (7) et tournés sur une carrosserie brute (2) susceptible d'être transportée sur le moyen de transport (3), au moyen du dispositif de mesure (4) optique, pour produire un rideau de lumière (23) en forme de panneau avec une image en réseau ou grille définie, formée de points d'image en grille plus clairs et d'autres plus sombres, à titre de bandes de mesure (24) sur la surface de la carrosserie brute (2) à l'aide des illuminateurs (11, 13, 16, 19) et pour détecter la lumière (25) réfléchie sous forme d'une illustration des points de grille sous un angle défini et pour fournir un signal de mesure correspondant au moyen des caméras à éléments CCD (12, 14, 17, 20),
- une installation calculatrice (5) reliée aux illuminateurs (11, 13, 16, 19) et aux caméras à éléments CCD (12, 14, 17, 20) et qui évalue le signal de mesure en utilisant des méthodes par triangulation, connues en soi, pour déterminer quels sont les défauts de surface (40, 41) présentant une importance, demandant un travail de retouche, dans lequel
- en aval du dispositif de mesure (4) optique est installé un dispositif de marquage (32) qui entoure le moyen de transport (3), transversalement à sa direction de transport, par une structure porteuse (33), de préférence avec un portique formé d'au moins deux montants de portique (34, 35) latéraux et d'au moins une traverse de portique (36) déplaçable sous l'effet d'une commande, par l'intermédiaire de l'installation calculatrice (5), et
- qui présente des buses de marquage (38, 39) déplaçables sous l'effet d'une commande, par l'intermédiaire de l'installation calculatrice (5), sur la structure porteuse (33), et présentant des buses de marquage (38, 39) désolidarisable, pour marquer des emplacements ayant des défauts de surface (40, 41) importants, identifiés, avec une encre soluble à l'eau.

11. Dispositif selon la revendication 10, **caractérisé en ce que** le moyen de transport (3) est une bande transporteuse continuellement stable et à mouvement calme.

12. Dispositif selon la revendication 3, **caractérisé en ce que** la bande transporteuse (3) est déplaçable sur deux zones latérales, chacune au-dessus d'une chaîne transporteuse à petits maillons.

13. Dispositif selon l'une des revendications 10 à 12, **caractérisé en ce que** la structure porteuse est un portique (7) muni d'au moins deux montants de portique (8, 9) latéraux et d'au moins une traverse de portique supérieure (10) et, tant sur les montants de portique latéraux (8, 9), qu'également sur la traverse de portique supérieure (10), sont disposés des illuminateurs (11, 13, 16, 19) et des caméras à éléments CCD (12, 14, 17, 20), sachant que, de préférence, chaque fois un illuminateur (11) et une caméra à éléments CCD (12) associée sont disposés sur les montants de portique (8, 9), un illuminateur (13) et une caméra à éléments CCD (14) associée sont disposés au centre (15) de la traverse de portique (10) et, chaque fois, un illuminateur (16, 19) et une caméra à éléments CCD (17, 20) associés sont disposés dans une zone latérale (18, 20), inclinée obliquement par rapport au centre de portique (15), de la traverse de portique (10).

14. Dispositif selon l'une des revendications 10 à 13, **caractérisé en ce que**, chaque fois, un illuminateur (11, 13, 16, 19) et une caméra à éléments CCD (12, 14, 17, 20) associée sont montés au même niveau en hauteur et décalés dans la direction de transport de la carrosserie brute (2).

15. Dispositif selon l'une des revendications 10 à 14, **caractérisé en ce que** les illuminateurs (11, 13, 16, 19) et/ou les caméras à éléments CCD (12, 14, 17, 20) sont susceptibles de pivoter sous l'effet d'une commande et/ou des parties de la structure porteuse (7), de préférence une traverse de portique (10), sont déplaçables sous l'effet d'une commande.

16. Dispositif selon l'une des revendications 10 à 15, **caractérisé en ce que**, en amont du dispositif de mesure (4) optique, est disposé un dispositif capteur (27), comportant des capteurs (28, 29) pour détecter l'amorce de la carrosserie brute (2) et pour détecter des données de carrosserie par l'intermédiaire d'un support de données de véhicule (30), et les capteurs (28, 29) étant reliés à l'installation calculatrice (5).

17. Dispositif selon l'une des revendications 10 à 16, **caractérisé en ce que** le moyen de transport (3) et le dispositif de mesure (4) optique et/ou le dispositif de marquage (32) forment un ensemble réalisé sous la forme d'un conteneur.

18. Dispositif selon la revendication 10 à 17, **caractérisé en ce qu'**au moins dans la zone du dispositif de mesure (4) optique est monté un recouvrement entourant celui-ci, de préférence un rideau (42) opaque à la lumière, faisant office d'écran contre la lumière de dispersion.
